# EUROPEAN PATENT SPECIFICATION

(11) **EP 4 342 729 B1**
(45) Date of publication and mention of the grant of the patent: **18.03.2026**
(21) Application number: 22197325.8
(22) Date of filing: 23.09.2022
(51) Int. Cl.: B60P 1/04

(54) **A LOAD-CARRIER VEHICLE WITH LOAD MONITORING**
LASTTRÄGERFAHRZEUG MIT LASTÜBERWACHUNG
VÉHICULE PORTEUR AVEC MONITEUR DE CHARGE

(43) Date of publication of application: 27.03.2024
(73) Proprietor: Volvo Autonomous Solutions AB, 405 08 Göteborg (SE)
(72) Inventor: NORESSON, Oskar, 411 27 Göteborg (SE)
(74) Representative: Zacco Sweden AB

(56) References cited:
- US-A1- 2021 276 472
- US-B1- 9 145 661
- US-B2- 7 594 441

## Description

### TECHNICAL FIELD

The invention relates to a load-carrier vehicle comprising a load container and a visual sensor device arranged to detect an object present at an upper load level. The invention also relates to methods for controlling a system comprising a load-carrier vehicle of the above type.

### BACKGROUND

When loading e.g. crushed stone or similar into a load container of a load-carrier vehicle, such as an articulated hauler, it is generally important to make sure the load is not too large or too unevenly distributed so as to prevent that the loaded material is located above an upper load level at or above an upper part of the load container (although it may be acceptable that a small portion of the load is located above the upper load level). When the load-carrier vehicle drives off after loading, there is a significant risk that material located above the upper load level will fall off, both when starting the vehicle and at a later stage during the transport. Material that has fallen off to the ground may cause damage to other vehicles running into the dropped material or may prevent vehicles form passing by. In addition, dropped load must normally be taken care of, which generates additional work.

Accordingly, it is a desire to avoid dropping load and thus also to avoid loading a too large and/or unevenly distributed load of material into a load container of a load-carrier vehicle. It is also a desire to try to observe whether loaded material is dropped while driving the loaded load-carrier vehicle so that the dropped load can be taken care of if needed before it causes any damage or other problem. This is normally handled, as good as it can, manually by humans. For instance, when a wheel loader is used for loading the load-carrier vehicle, an operator of the wheel loader can check whether the size and shape of the load is acceptable. Detecting drop of load while driving is more difficult; a driver of the load-carrier vehicle can use side view mirrors to try to detect dropping of load during driving, but a driver cannot continuously focus on the side view mirrors and to see behind a truck or similar is hard or even impossible.

There is an increased interest in using autonomous vehicles in mining applications or at other constructions sites, in particular autonomous load-carrier vehicles such as mining dumpers and various trucks or haulers. The use of such vehicles makes load size/shape and dropping of load an even more significant issue since human interaction is not possible in the same way as for manually operated vehicles.

US2021/0276472A1 discloses a dump truck control system with a flow rate measurement system including an optical sensor used to calculate the change in volume of the material over time as it is being dumped.

US9145661B1 discloses a control system for a worksite including a haul machine, a cleanup machine and a sensor onboard the haul machine configured to generate a signal indicative of a load of material lost from the haul machine.

US7594441B2 discloses an automated lost load response system including a first sensor situated to detect the contour of the road surface forward of a first machine and a second sensor situated to detect the contour of the road surface rearward of the first machine.

### SUMMARY

An object of the invention is to provide a load-carrier vehicle that is adapted to handle issues related to large or unevenly distributed loads and the risk of dropping portions of such loads. The invention is in particular useful for autonomous vehicles but also useful for manually operated vehicles. A further object is to provide methods for controlling a system comprising such a load-carrier vehicle.

The load-carrier vehicle of this disclosure comprises: a load container; and a visual sensor device arranged at an upper part of the load container, wherein the visual sensor device is arranged to monitor an upper load level of the load container and detect an object present at the upper load level, wherein the upper load level forms a substantially flat plane at the upper part of the load container.

The load-carrier vehicle is typically a mining dumper, articulated hauler or truck having a load container (sometimes called bucket) with an open upper side and with a rectangular form at least at the upper part thereof. The vehicle may be autonomous or manually operated, in which case it typically is provided with a driver's cab.

The visual sensor device may typically include a LIDAR sensor arranged at an upper rim of the load container, for instance in a corner of the load container to reduce a working angle to 90°. Several sensors of LIDAR or other type may be included in the sensor device.

A light emitting unit, typically a pulsed laser, may be arranged to scan the upper load level, which typically forms a flat plane at the upper part of the load container close to the upper rim thereof. A LIDAR sensor is capable of detecting objects in a monitored layer or area, and such a sensor is normally also capable of determining a distance to a detected object and the size (or at least a width) of the detected object.

The upper load level may be horizontally limited by the load container by arranging the sensor inside the load container at some distance below the upper rim (or by arranging the sensor so that it can "look into" the container through a sensor window at some distance below the upper rim). Alternatively, the upper load level may be flush with or slightly above the upper rim of the load container. In such a case objects located beyond the load container will not be considered by the visual sensor device. In any case, objects, i.e. a portion of the load, such as a stone or some crushed stones, present at the upper load level will be detected by the device. Such a detection triggers a signal from the visual sensor device and that signal can be used in different ways. Also removal or lateral movement of an object present at the upper load level may trigger a signal that can be used in different ways.

A signal from the visual sensor device may be transmitted to a central control system or, possibly via the central control system, to one or more other vehicles that in some way is/are connected to the load-carrier vehicle. If the load-carrier vehicle is a manually operated vehicle, the signal may be used to notify the operator of the same vehicle, for instance as an additional safety measure in case the operator has not noted dropping or movement of load when checking using the side view mirrors.

As described further below, the visual sensor device is, however, primarily advantageous for autonomous load-carrier vehicles. In an example, the detection signal is transmitted to an operator of a wheel loader used for loading the load-carrier vehicle. The signal may be transmitted directly to a receiving unit arranged in the wheel loader and a control system of the wheel loader may notify the operator. The signal may also be transmitted via a central control system. This may be used as an additional safety measure in case the wheel loader operator does not note that the load becomes too large (high) or is too unevenly distributed.

In a further example, the visual sensor device might detect presence or motion of an object and generate a signal while the (loaded) autonomous load-carrier vehicle is moving between a loading position and an unloading position. Such a signal indicates a possible drop of load. By registering also the position of the load-carrier vehicle at the point of time when the detection signal was generated, which can be done using positioning data (e.g. GPS) for the load-carrier vehicle, it becomes possible to gain knowledge also on the geographic position for the possible load drop. Various measures can then be taken, such as warning other vehicles approaching that geographic position and/or let someone take a look manually at the possible load drop location.

In an embodiment, the visual sensor device comprises a light-emitting unit configured to distribute light over the upper load level. As an example, the light-emitting unit may comprise a pulsed laser source and a rotatable mirror allowing the light from the laser to scan a plane forming the upper load level. However, other structures are also possible.

In an embodiment, the visual sensor device comprises a sensor unit configured to detect light that has been emitted from the light-emitting unit and thereafter been reflected or backscattered from an object present at the upper load level. Various photodetectors may be used.

In an embodiment, the visual sensor device is configured to determine a position of an object present at the upper load level and/or to at least approximately determine a size of an object present at the upper load level. The position of the detected object (in relation to the sensor device) may be determined by determining the distance and direction to the object. The direction may be known from e.g. an angle of the rotatable mirror of the light-emitting unit and the distance can be obtained by recording the time between transmitted and reflected/backscattered pulses and by using the speed of light to calculate the distance travelled. The width and thus the approximate size of the object may be obtained from the scanning angle within which the object is detected.

The visual sensor device typically includes, or is connected to, control circuitry configured to control operation of the device and handle the data sensed by the device. For instance, the control circuitry may be configured to ignore sensed data that indicate presence of an object located further away than a threshold distance (e.g. a diagonal of the load container) and it may be configured to display data and generate an alarm signal in different ways.

In an embodiment, the upper load level forms a substantially flat plane at the upper part of the load container.

In an embodiment, the load container comprises at least one corner at the upper part thereof, wherein the visual sensor device is arranged in said corner. This reduces the scan angle, typically to 90°, compared to if the visual sensor is arranged e.g. in the middle of an upper front part of the load container.

In an embodiment, the visual sensor device is a LIDAR sensor.

In an embodiment, the load-carrier vehicle is a mining dumper, articulated hauler or truck.

In an embodiment, the load-carrier vehicle is an autonomous vehicle.

In an embodiment, the load-carrier vehicle is provided with a control and communication circuitry configured to transmit, in a wire-less manner, data sensed by the visual sensor device to a receiving unit not arranged on the load-carrier vehicle. As further described below, the receiving unit may be arranged in another vehicle or be connected to (or form part of) a central control system. The receiving unit may also be e.g. a mobile phone.

The invention also relates to a method for controlling a system comprising a load-carrier vehicle according to above, wherein the method comprises: transmitting data sensed by the visual sensor device to a receiving unit arranged on a loader vehicle used for loading the load-carrier vehicle when the load-carrier vehicle is set in a loading position; and notifying a driver of the loader vehicle in case an object present at the upper load level has been detected before the load-carrier vehicle has started to drive away from the loading position. The loader vehicle receiving unit may be connected to a control system of the loader vehicle or form a separate unit. Notification to the loader vehicle driver may be effected in different ways, such as an alarm signal on a display.

The invention also relates to a further method for controlling a system comprising a load-carrier vehicle according to above, wherein the further method comprises: moving the load-carrier vehicle and, if detecting that an object is present at the upper load level during motion of the load-carrier vehicle, registering a position of the load-carrier vehicle at a point of time when the object was detected so as to register a position of a possibly dropped load.

In an embodiment of the further method it comprises: communicating said position to other vehicles so as to allow said other vehicles to adapt their movements or actions in response to the position of the possibly dropped load.

The invention also relates to a control circuitry for controlling a system comprising a load-carrier vehicle according to above, wherein the control unit is configured to perform any of the methods above.

### BRIEF DESCRIPTION OF THE DRAWINGS

With reference to the appended drawings, below follows a more detailed description of embodiments of the invention cited as examples.
Figure 1 shows a schematic side view of a load-carrier vehicle according to the present disclosure.
Figure 2 shows a top view of the load carrier vehicle of figure 1.
Figure 3 shows a schematic side view of a load container suitable for a load-carrier vehicle according to the present disclosure.

### DETAILED DESCRIPTION OF EXAMPLE EMBODIMENTS OF THE INVENTION

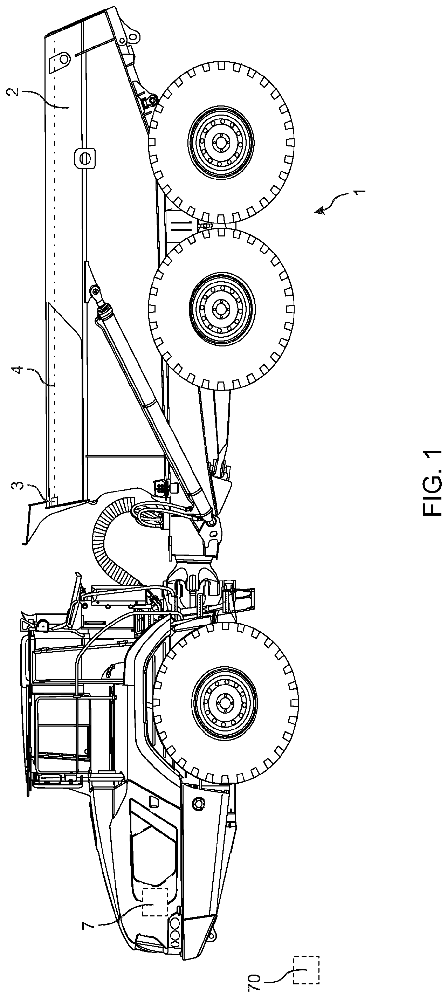

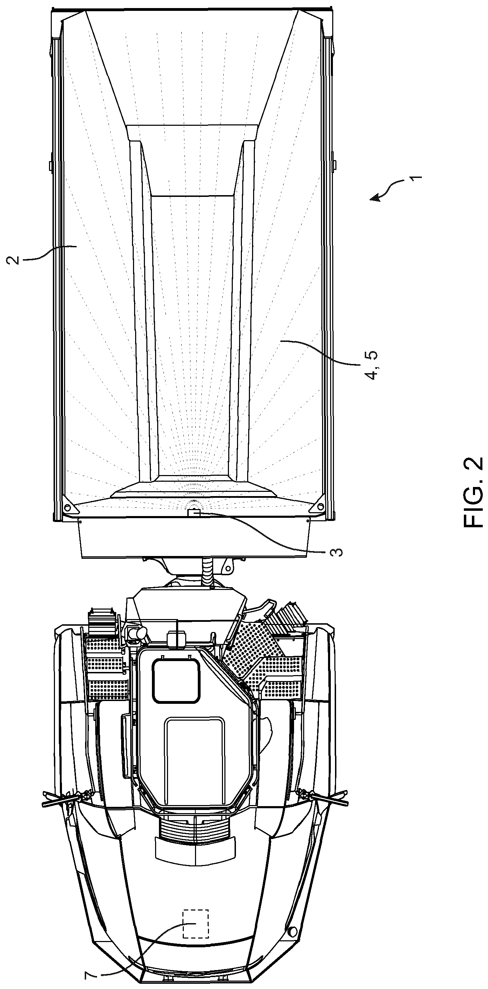

Figure 1 shows a schematic side view of a load-carrier vehicle 1 according to the present disclosure. Figure 2 shows a top view of the load-carrier vehicle of figure 1. The vehicle is in this example an autonomous articulated hauler.

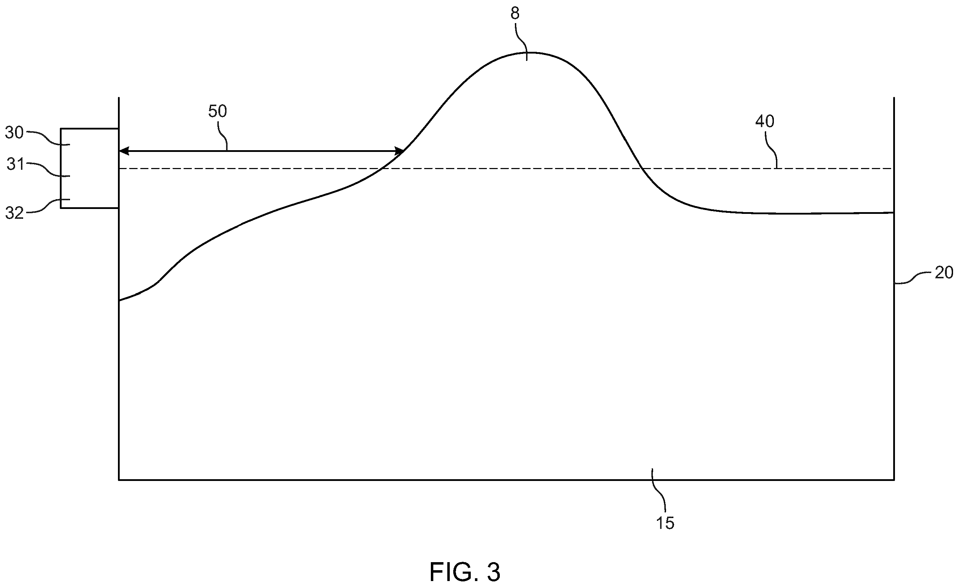

As shown in figures 1-2, the load-carrier vehicle 1 comprises a load container 2 and a visual sensor device 3 arranged at an upper part of the load container 2. The visual sensor device 3 is in this example a LIDAR sensor and it is arranged to monitor an upper load level 4 of the load container 2 and detect an object 8 (see figure 3) present at the upper load level 4. The LIDAR sensor 4 emits light, indicated as lines 5 in figure 2, in a layer that defines the upper load level 4.

Figure 3 shows a schematic side view of another load container 20 that may be arranged on a load-carrier vehicle, such as the vehicle 1 shown in figures 1-2. The load container 20 is provided with a visual sensor device 30 similar to the device 3 in figures 1-2, i.e. a LIDAR sensor. Figure 3 indicates that the visual sensor device 30 comprises a light-emitting unit 31 configured to distribute light 50 over the upper load level 40, and that it further comprises a sensor unit 32 configured to detect light that has been emitted from the light-emitting unit 31 and thereafter been reflected or backscattered from the object 8 present at the upper load level 40. The arrow 50 indicates both emitted and reflected or backscattered light. Light-emitting units and sensor units are standard components in LIDAR sensor and other visual sensor devices so these components are therefore not shown in any detail.

The object 8 in figure 3 is a top peak in a load 15 of gravel. A portion of the load protrudes upwards through the upper load level 40, i.e. the object 8 is present at the upper load level 40. This is detected by the LIDAR sensor 30. The load 15 may consist of any material, typically stones, crushed stones, gravel or similar.

The visual sensor device 3, 30 may be configured to determine a position of the object 8 in relation to the sensor device 3, 30 (and thus in relation to the load container 2, 20). It may also at least approximately determine a size of the object 8 by determining its width.

More than one visual sensor device 3, 30 may be arranged at the load container 2, 20. A single visual sensor device 3, 30 may be arranged in different positions, for instance at a front side of the load container 2 as indicated in figures 1-2. As an alternative, the visual sensor device 3, 30 may be arranged in a corner of the load container 2, 20. This reduces the required field-of-view for the visual sensor device 3, 30 to 90° (from 180° in the example shown in figure 2).

As indicated in figures 1-3, the upper load level 4, 40 forms a substantially flat plane at the upper part of the load container 2, 20.

As indicated in figure 1, the load-carrier vehicle 1 is further provided with a control and communication circuitry 7 configured to transmit, in a wire-less manner, data sensed by the visual sensor device 3, 30 to a receiving unit 70 not arranged on the load-carrier vehicle 1. Wire-less communication between vehicles and various control systems is well known as such. The receiving unit 70 may be arranged in another vehicle, e.g. a wheel loader used for loading the load-carrier vehicle 1, or it may be connected to or form part of some central control system used for controlling a system of vehicles. The term "sensed data" is not limited to data provided by the sensor unit 32 of the device 3, 30 but includes any data signal from the visual sensor device 3, 30, such as detailed data showing information of the object 8 or a simple signal saying only that an object 8 has been detected to be present in the upper load level 4.

An example of a method for controlling a system comprising the load-carrier vehicle 1 comprises:
- transmitting data sensed by the visual sensor device 3, 30 to a receiving unit 70 arranged on a loader vehicle used for loading the load-carrier vehicle 1 when the load-carrier vehicle 1 is set in a loading position; and
- notifying, before the load-carrier vehicle 1 has started to drive away from the loading position, a driver of the loader vehicle in case an object 8 present at the upper load level 4, 40 has been detected.

As mentioned previously, the details of the method can be carried out in different ways.

Another example of a method for controlling a system comprising the load-carrier vehicle 1 comprises:
- moving the load-carrier vehicle 1, e.g. from the loading position to an unloading position, and if detecting that an object 8: i) is present at or enters the upper load level 4, 40; ii) moves within the upper load level 4, 40; and/or iii) leaves the upper load level 4, 40, during motion of the load-carrier vehicle 1:
- registering a position of the load-carrier vehicle 1 at a point of time when the presence or motion of the object 8 was detected so as to register a position of a possibly dropped load; and
- communicating said position to other vehicles so as to allow said other vehicles to adapt their movements or actions in response to the position of the possibly dropped load.

The position of the load-carrier vehicle 1 is normally easily established by means of GPS equipment or similar arranged onboard.

A control circuitry, such as a central control system, may be used for controlling a system comprising the load-carrier vehicle 1. Such a control circuitry can be used to perform the methods described above.

The number of LIDAR hits on the object can be used to determine the severity of the situation. Several hits could equal a potentially bigger dropped object and therefore a more serious issue, whereas few or a single hit could equal a small rock which could possibly be allowed to be ignored by the system.

The system could further be combined with a position within a map used for localization. By combining the dropped load detecting with the vehicle's position within a map, a POI (point of interest) can be added to the map at that location, prompting other vehicles to approach that area with reduced speed or avoid the area completely. The next vehicle to approach the POI could then use its obstacle detection system to check if the load was actually dropped or not. If the load proves to be an issue, the vehicle can call for help to remove the object. If no/insignificant load is detected the POI can be removed from the map.

## Claims

1. A load-carrier vehicle (1) comprising:
- a load container (2, 20); and
- a visual sensor device (3, 30) arranged at an upper part of the load container (2, 20),
**characterized in**
**that** the visual sensor device (3, 30) is arranged to monitor an upper load level (4, 40) of the load container (2, 20) and detect an object (8) present at the upper load level (4, 40), wherein the upper load level (4, 40) forms a substantially flat plane at the upper part of the load container (2, 20).

2. The load-carrier vehicle (1) according to claim 1, wherein the visual sensor device (3, 30) comprises a light-emitting unit (31) configured to distribute light (5, 50) over the upper load level (4, 40).

3. The load-carrier vehicle (1) according to claim 2, wherein the visual sensor device (3, 30) comprises a sensor unit (32) configured to detect light that has been emitted from the light-emitting unit (31) and thereafter been reflected or backscattered from an object (8) present at the upper load level (4, 40).

4. The load-carrier vehicle (1) according to any of the above claims, wherein the visual sensor device (3, 30) is configured to determine a position of an object (8) present at the upper load level (4, 40) and/or to at least approximately determine a size of an object (8) present at the upper load level (4, 40).

5. The load-carrier vehicle (1) according to any of the above claims, wherein the load container (2) comprises at least one corner at the upper part thereof, wherein the visual sensor device (3) is arranged in said corner.

6. The load-carrier vehicle (1) according to any of the above claims, wherein the visual sensor device (3, 30) is a LIDAR sensor.

7. The load-carrier vehicle (1) according to any of the above claims, wherein the load-carrier vehicle (1) is a mining dumper, articulated hauler or truck.

8. The load-carrier vehicle (1) according to any of the above claims, wherein the load-carrier vehicle (1) is an autonomous vehicle.

9. The load-carrier vehicle (1) according to any of the above claims, wherein the load-carrier vehicle (1) is provided with a control and communication circuitry (7) configured to transmit, in a wire-less manner, data sensed by the visual sensor device (3, 30) to a receiving unit (70) not arranged on the load-carrier vehicle (1).

10. Method for controlling a system comprising a load-carrier vehicle (1) according to any of the above claims,
**characterized in**
**that** the method comprises:
- transmitting data sensed by the visual sensor device (3, 30) to a receiving unit (70) arranged on a loader vehicle used for loading the load-carrier vehicle (1) when the load-carrier vehicle (1) is set in a loading position; and
- notifying a driver of the loader vehicle in case an object (8) present at the upper load level (4, 40) has been detected before the load-carrier vehicle (1) has started to drive away from the loading position.

11. Method for controlling a system comprising a load-carrier vehicle (1) according to any of claims 1-10,
**characterized in**
**that** the method comprises:
- moving the load-carrier vehicle (1) and,
if detecting that an object (8): i) is present at or enters the upper load level (4, 40); ii) moves within the upper load level (4, 40); and/or iii) leaves the upper load level (4, 40), during motion of the load-carrier vehicle (1),
- registering a position of the load-carrier vehicle (1) at a point of time when the presence or motion of the object (8) was detected so as to register a position of a possibly dropped load.

12. Method according to claim 12, the method further comprising:
- communicating said position to other vehicles so as to allow said other vehicles to adapt their movements or actions in response to the position of the possibly dropped load.

13. A control circuitry for controlling a system comprising a load-carrier vehicle (1) according to any of claims 1-10, the control unit being configured to perform the method according to any of claims 11-13.

## Patentansprüche

1. Lastträgerfahrzeug (1), umfassend:
- einen Lastbehälter (2, 20); und
- eine optische Sensorvorrichtung (3, 30), die in einem oberen Teil des Lastbehälters (2, 20) angeordnet ist, **dadurch gekennzeichnet,**
**dass** die optische Sensorvorrichtung (3, 30) dazu angeordnet ist, eine obere Lastfläche (4, 40) des Lastbehälters (2, 20) zu überwachen und ein Objekt (8), das auf der oberen Lastfläche (4, 40) vorhanden ist, zu detektieren, wobei die obere Lastfläche (4, 40) eine im Wesentlichen flache Ebene an dem oberen Teil des Lastbehälters (2, 20) bildet.

2. Lastträgerfahrzeug (1) nach Anspruch 1, wobei die optische Sensorvorrichtung (3, 30) eine lichtemittierende Einheit (31) umfasst, die dazu konfiguriert ist, Licht (5, 50) über die obere Lastfläche (4, 40) zu verteilen.

3. Lastträgerfahrzeug (1) nach Anspruch 2, wobei die optische Sensorvorrichtung (3, 30) eine Sensoreinheit (32) umfasst, die dazu konfiguriert ist, Licht zu detektieren, das von der lichtemittierenden Einheit (31) emittiert wurde und danach von einem Objekt (8), das auf der oberen Lastfläche (4, 40) vorhanden ist, reflektiert oder zurückgestreut wurde.

4. Lastträgerfahrzeug (1) nach einem der vorhergehenden Ansprüche, wobei die optische Sensorvorrichtung (3, 30) dazu konfiguriert ist, eine Position eines Objekts (8), das auf der oberen Lastfläche (4, 40) vorhanden ist, zu bestimmen und/oder mindestens annähernd eine Größe eines Objekts (8), das auf der oberen Lastfläche (4, 40) vorhanden ist, zu bestimmen.

5. Lastträgerfahrzeug (1) nach einem der vorhergehenden Ansprüche, wobei der Lastbehälter (2) mindestens eine Ecke an dem oberen Teil davon umfasst, wobei die optische Sensorvorrichtung (3) in der Ecke angeordnet ist.

6. Lastträgerfahrzeug (1) nach einem der vorhergehenden Ansprüche, wobei die optische Sensorvorrichtung (3, 30) ein LIDAR-Sensor ist.

7. Lastträgerfahrzeug (1) nach einem der vorhergehenden Ansprüche, wobei das Lastträgerfahrzeug (1) ein Bergbaukipper, Knickgelenkter-Muldenkipper oder Lastwagen ist.

8. Lastträgerfahrzeug (1) nach einem der vorhergehenden Ansprüche, wobei das Lastträgerfahrzeug (1) ein autonomes Fahrzeug ist.

9. Lastträgerfahrzeug (1) nach einem der vorhergehenden Ansprüche, wobei das Lastträgerfahrzeug (1) mit einer Steuerungs- und Kommunikationsschaltung (7) versehen ist, die dazu konfiguriert ist, auf drahtlose Weise Daten, die durch die optische Sensorvorrichtung (3, 30) erfasst werden, an eine Empfängereinheit (70) zu übertragen, die nicht auf dem Lastträgerfahrzeug (1) angeordnet ist.

10. Verfahren zum Steuern eines Systems, das ein Lastträgerfahrzeug (1) nach einem der vorhergehenden Ansprüche umfasst,
**dadurch gekennzeichnet,**
**dass** das Verfahren Folgendes umfasst:
- Übertragen von Daten, die durch die optische Sensorvorrichtung (3, 30) erfasst werden, an eine Empfängereinheit (70), die auf einem Beladefahrzeug angeordnet ist, das zum Beladen des Lastträgerfahrzeugs (1) verwendet wird, wenn das Lastträgerfahrzeug (1) in eine Beladeposition gebracht ist; und
- Benachrichtigen eines Fahrers des Beladefahrzeugs, falls ein Objekt (8), das auf der oberen Lastfläche (4, 40) vorhanden ist, detektiert wurde, bevor das Lastträgerfahrzeug (1) damit begonnen hat, von der Beladeposition weg zu fahren.

11. Verfahren zum Steuern eines Systems, das ein Lastträgerfahrzeug (1) nach einem der Ansprüche 1-10 umfasst,
**dadurch gekennzeichnet,**
**dass** das Verfahren Folgendes umfasst:
- Bewegen des Lastträgerfahrzeugs (1) und,
wenn detektiert wird, dass ein Objekt (8): i) auf der oberen Lastfläche (4, 40) vorhanden ist oder diese betritt; ii) sich auf der oberen Lastfläche (4, 40) bewegt; und/oder iii) die obere Lastfläche (4, 40) während einer Bewegung des Lastträgerfahrzeugs (1) verlässt,
- Registrieren einer Position des Lastträgerfahrzeugs (1) zu einem Zeitpunkt, an dem das Vorhandensein oder die Bewegung des Objekts (8) detektiert wurde, um so eine Position einer möglicherweise heruntergefallenen Last zu registrieren.

12. Verfahren nach Anspruch 12, wobei das Verfahren ferner Folgendes umfasst:
- Kommunizieren der Position an andere Fahrzeuge, um es den anderen Fahrzeugen so zu ermöglichen, ihre Bewegungen oder Handlungen als Reaktion auf die Position der möglicherweise heruntergefallenen Last anzupassen.

13. Steuerschaltung zum Steuern eines Systems, das ein Lastträgerfahrzeug (1) nach einem der Ansprüche 1-10 umfasst, wobei die Steuereinheit dazu konfiguriert ist, das Verfahren nach einem der Ansprüche 11-13 durchzuführen.

## Revendications

1. Véhicule porteur (1) comprenant :
- un conteneur de charge (2, 20) ; et
- un dispositif capteur visuel (3, 30) agencé au niveau d'une partie supérieure du conteneur de charge (2, 20), **caractérisé en ce que**
le dispositif capteur visuel (3, 30) est agencé pour surveiller un niveau de charge supérieur (4, 40) du conteneur de charge (2, 20) et détecter un objet (8) présent au niveau du niveau de charge supérieur (4, 40), dans lequel le niveau de charge supérieur (4, 40) forme un plan sensiblement plat au niveau de la partie supérieure du conteneur de charge (2, 20).

2. Véhicule porteur (1) selon la revendication 1, dans lequel le dispositif capteur visuel (3, 30) comprend une unité émettrice de lumière (31) configurée pour distribuer de la lumière (5, 50) sur le niveau de charge supérieur (4, 40).

3. Véhicule porteur (1) selon la revendication 2, dans lequel le dispositif capteur visuel (3, 30) comprend une unité de capteur (32) configurée pour détecter de la lumière qui a été émise à partir de l'unité émettrice de lumière (31) et a ensuite été réfléchie ou rétrodiffusée à partir d'un objet (8) présent au niveau du niveau de charge supérieur (4, 40).

4. Véhicule porteur (1) selon l'une quelconque des revendications précédentes, dans lequel le dispositif capteur visuel (3, 30) est configuré pour déterminer une position d'un objet (8) présent au niveau du niveau de charge supérieur (4, 40) et/ou pour déterminer au moins approximativement une taille d'un objet (8) présent au niveau du niveau de charge supérieur (4, 40).

5. Véhicule porteur (1) selon l'une quelconque des revendications précédentes, dans lequel le conteneur de charge (2) comprend au moins un coin au niveau de sa partie supérieure, dans lequel le dispositif capteur visuel (3) est agencé dans ledit coin.

6. Véhicule porteur (1) selon l'une quelconque des revendications précédentes, dans lequel le dispositif capteur visuel (3, 30) est un capteur LIDAR.

7. Véhicule porteur (1) selon l'une quelconque des revendications précédentes, dans lequel le véhicule porteur (1) est un dumper de mine, un tombereau articulé ou un camion.

8. Véhicule porteur (1) selon l'une quelconque des revendications précédentes, dans lequel le véhicule porteur (1) est un véhicule autonome.

9. Véhicule porteur (1) selon l'une quelconque des revendications précédentes, dans lequel le véhicule porteur (1) est doté d'un circuit de commande et de communication (7) configuré pour transmettre, sans fil, des données détectées par le dispositif capteur visuel (3, 30) à une unité de réception (70) non agencée sur le véhicule porteur (1).

10. Procédé de commande d'un système comprenant un véhicule porteur (1) selon l'une quelconque des revendications précédentes, **caractérisé en ce que** le procédé comprend :
- la transmission de données détectées par le dispositif capteur visuel (3, 30) à une unité de réception (70) agencée sur un véhicule de chargement utilisé pour charger le véhicule porteur (1) lorsque le véhicule porteur (1) est placé dans une position de chargement ; et
- la notification à un conducteur du véhicule de chargement dans le cas où un objet (8) présent au niveau du niveau de charge supérieur (4, 40) a été détecté avant que le véhicule porteur (1) n'ait commencé à s'éloigner de la position de chargement.

11. Procédé de commande d'un système comprenant un véhicule porteur (1) selon l'une quelconque des revendications 1 à 10, **caractérisé en ce que** le procédé comprend :
- le déplacement du véhicule porteur (1) et,
en cas de détection qu'un objet (8) : i) est présent au niveau de ou pénètre dans le niveau de charge supérieur (4, 40) ; ii) se déplace à l'intérieur du niveau de charge supérieur (4, 40) ; et/ou iii) quitte le niveau de charge supérieur (4, 40), pendant le mouvement du véhicule porteur (1),
- l'enregistrement d'une position du véhicule porteur (1) à un instant où la présence ou le mouvement de l'objet (8) a été détecté de manière à enregistrer une position d'une charge éventuellement tombée.

12. Procédé selon la revendication 12, le procédé comprenant en outre :
- la communication de ladite position à d'autres véhicules de manière à permettre auxdits autres véhicules d'adapter leurs mouvements ou actions en réponse à la position de la charge éventuellement tombée.

13. Circuit de commande pour commander un système comprenant un véhicule porteur (1) selon l'une quelconque des revendications 1 à 10, l'unité de commande étant configurée pour réaliser le procédé selon l'une quelconque des revendications 11 à 13.
